# EUROPEAN PATENT APPLICATION

(11) **EP 3 904 078 A1**
(43) Date of publication of application: **03.11.2021**
(21) Application number: 19901454.9
(22) Date of filing: 19.12.2019
(51) Int. Cl.: B32B 27/00, G02B 1/111, G02B 1/14, G09F 9/00, B32B 7/023

(54) **ANTI-REFLECTIVE FILM AND PRODUCTION METHOD FOR SAME**

(30) Priority: 26.12.2018 JP 2018243426
(71) Applicant: Higashiyama Film Co., Ltd., Nagoya-shi, Aichi 450-0002 (JP)
(72) Inventor: NATSUME, Saki, Mizunami-shi, Gifu 509-6104 (JP)
(74) Representative: Horn Kleimann Waitzhofer Patentanwälte PartG mbB
(86) International application number: PCT/JP2019/049792
(87) International publication number: WO 2020/137786

(57) **Abstract**

Provided are an antireflection film that has both ease of finger sliding and transparency, and a method for manufacturing the antireflection film. An antireflection film 10 includes a substrate film 12 and a first resin layer 14 formed over a surface of the substrate film 12, and the first resin layer 14 contains large particles 18 that form raised portions in a surface of the first resin layer 14, hollow silica particles 22 that have a smaller average particle size than the large particles 18, and a binder resin. The amount of the large particles 18 is preferably within a range of 1.0 to 3.5 mass% of the total mass of the first resin layer 14, and the amount of the hollow silica particles 22 is preferably within a range of 30 to 70 mass% of the total mass of the first resin layer 14.

## Description

### Technical Field

The present invention relates to an antireflection film and a method for manufacturing the antireflection film, and more specifically relates to an antireflection film to be used for a display surface of a touch panel of a car navigation system, a smartphone, or the like, and a method for manufacturing the antireflection film.

### Background Art

Capacitive touch panels that enable operation of a device through a touch on a display on a screen are widely used in vehicle-mounted image display devices such as car navigation systems and image display devices such as smartphones. Operations that are made on a screen of a capacitive touch panel include a "tap operation" of tapping the screen with a finger, a "drag operation" of sliding a finger while pressing the finger against the screen, a "flick operation" of sliding a finger and quickly separating the finger from the screen as if flicking something, and a "pinch-in operation" and a "pinch-out operation" of narrowing or widening a space between two fingers while pressing the fingers against the screen. Ease of sliding fingers (ease of finger sliding) is required for capacitive touch panels to improve their operability.

For example, Patent Document 1 discloses an antireflection film that is disposed on a surface of a touch panel and includes a low-refractive-index layer that contains (meth)acrylic resin, hollow silica particles, reactive silica particles, a fluorine-based antifouling agent, and a fluorine-silicone-based antifouling agent. Patent Document 1 discloses that the low-refractive-index layer contains the fluorine-silicone-based antifouling agent to achieve excellent ease of finger sliding.

### Citation List

### Patent Document

Patent Document 1: JP 6070195 B2

### Summary of Invention

### Technical Problem

However, in the antireflection film of Patent Document 1, the ease of finger sliding is improved by the antifouling agent contained in the low-refractive-index layer, and therefore, it is hard to say that the ease of finger sliding is sufficiently good.

Furthermore, transparency is also required for an antireflection film that is disposed on a display surface of a touch panel. Conventional technologies are insufficient to realize both ease of finger sliding and transparency.

A problem to be solved by the present invention is to provide an antireflection film that has both ease of finger sliding and transparency, and a method for manufacturing the antireflection film.

### Solution to Problem

To solve the above problem, the gist of an antireflection film according to the present invention is an antireflection film for a touch panel, to be disposed on a display surface of the touch panel, the antireflection film including a substrate film and a first resin layer that is formed over a surface of the substrate film, wherein the first resin layer contains large particles that form raised portions in a surface of the first resin layer, hollow silica particles that have a smaller average particle size than the large particles, and a binder resin.

The amount of the large particles is preferably within a range of 1.0 to 3.5 mass% of the total mass of the first resin layer, and the amount of the hollow silica particles is preferably within a range of 30 to 70 mass% of the total mass of the first resin layer. The large particles are preferably solid particles. The large particles are preferably inorganic oxide particles. An average particle size of the large particles is preferably greater than or equal to an average thickness of the first resin layer, and an average particle size of the hollow silica particles is preferably smaller than the average thickness of the first resin layer. The first resin layer preferably further contains a polysiloxane. The amount of the polysiloxane is preferably within a range of 0.05 to 25 mass% of the total mass of the first resin layer. The antireflection film may further include a hard coat layer between the substrate film and the first resin layer. The antireflection film may further include a protective film that is provided over a surface of the first resin layer with an adhesive layer interposed therebetween. The antireflection film may further include a transparent adhesive layer that is provided on a surface of the substrate film opposite to the first resin layer.

The gist of a method for manufacturing an antireflection film according to the present invention is a method for manufacturing an antireflection film for a touch panel, to be disposed on a display surface of the touch panel, the method including forming a first resin layer over a surface of a substrate film, wherein the first resin layer contains large particles that form raised portions in a surface of the first resin layer, hollow silica particles that have a smaller average particle size than the large particles, and a binder resin.

### Advantageous Effects of Invention

In the antireflection film according to the present invention, the first resin layer formed over the surface of the substrate film contains large particles that form raised portions in the surface of the first resin layer and hollow silica particles that have a smaller average particle size than the large particles, and therefore, ease of finger sliding and transparency of the antireflection film are excellent. Furthermore, due to the first resin layer containing the hollow silica particles, the refractive index of the first resin layer is low, and the antireflection film has an excellent antireflection function.

Also, if the first resin layer further contains a polysiloxane, ease of finger sliding can be improved while excellent transparency is maintained. Also, if the antireflection film further includes a hard coat layer between the substrate film and the first resin layer, scratch resistance can be improved. Also, if the antireflection film further includes a protective film that is provided over a surface of the first resin layer with an adhesive layer interposed therebetween, the first resin layer can be kept from being damaged when the antireflection film is handled.

According to the method for manufacturing an antireflection film according to the present invention, the first resin layer containing the large particles that form raised portions in the surface of the first resin layer and the hollow silica particles that have a smaller average particle size than the large particles is formed over the surface of the substrate film, and therefore, ease of finger sliding and transparency of the obtained antireflection film are excellent. Furthermore, due to the first resin layer containing the hollow silica particles, the refractive index of the first resin layer is low, and the antireflection film has an excellent antireflection function.

### Brief Description of Drawings

Fig. 1 is a cross-sectional view of an antireflection film according to a first embodiment of the present invention.
Fig. 2 is a cross-sectional view of an antireflection film according to a second embodiment of the present invention.
Fig. 3 is a cross-sectional view of an antireflection film according to a third embodiment of the present invention.
Fig. 4 is a cross-sectional view of an antireflection film according to a fourth embodiment of the present invention.
Fig. 5 (a) is an SEM photograph of a first resin layer of Example 1 and Fig. 5(b) is an SEM photograph of a first resin layer of Comparative Example 3.

### Description of Embodiments

The following describes the present invention in detail.

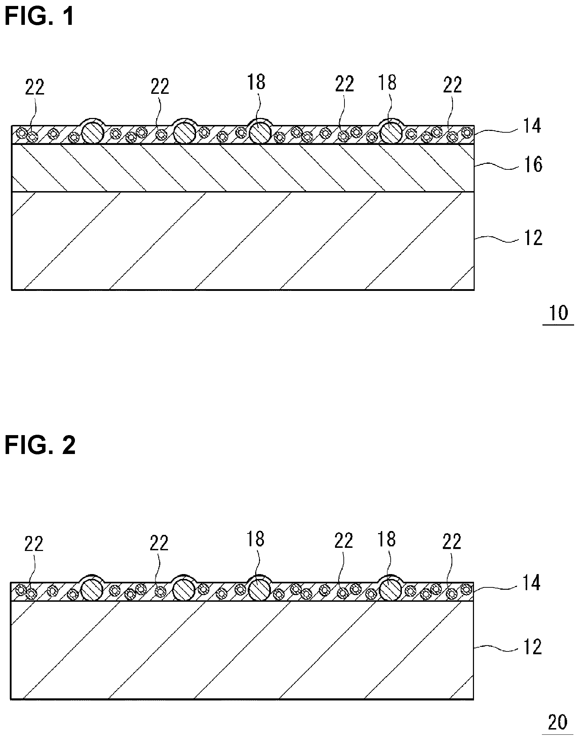

Fig. 1 is a cross-sectional view of an antireflection film according to a first embodiment of the present invention. As shown in Fig. 1, an antireflection film 10 according to the first embodiment of the present invention includes a substrate film 12, a first resin layer 14 that is formed over a surface of the substrate film 12, and a hard coat layer 16 that is formed between the substrate film 12 and the first resin layer 14. The antireflection film 10 includes the substrate film 12, the hard coat layer 16, and the first resin layer 14 layered in this order.

There is no particular limitation to the substrate film 12 so long as the substrate film 12 is transparent. Examples of the substrate film 12 include a transparent polymer film and a glass film. "Transparent" means that the total light transmittance in the visible light wavelength range is at least 50%, and the total light transmittance is more preferably at least 85%. The total light transmittance can be measured in accordance with JIS K7361-1 (1997). The thickness of the substrate film 12 is not particularly limited, but is preferably within a range of 2 to 500 pm from the standpoint of ease of handling and the like. The thickness is more preferably within a range of 2 to 200 µm. Note that the term "film" commonly refers to those having a thickness less than 0.25 mm, but here the term also encompasses a film having a thickness of 0.25 mm or more as long as the film can be wound into a roll.

Examples of polymer materials of the substrate film 12 include polyester resins such as polyethylene terephthalate resin and polyethylene naphthalate resin, polycarbonate resin, poly(meth)acrylate resin, polystyrene resin, polyamide resin, polyimide resin, polyacrylonitrile resin, polyolefin resins such as polypropylene resin, polyethylene resin, polycycloolefin resin, and cycloolefin copolymer resin, polyphenylene sulfide resin, polyvinyl chloride resin, polyvinylidene chloride resin, and polyvinyl alcohol resin. The substrate film 12 may be constituted by any one of these polymer materials or a combination of two or more of these polymer materials. Among these, polyethylene terephthalate resin, polyimide resin, polycarbonate resin, poly(meth)acrylate resin, polycycloolefin resin, and cycloolefin copolymer resin are more preferable from the standpoint of optical properties and durability, for example.

The substrate film 12 may be constituted by a single layer that contains one or more of the above-listed polymer materials, or two or more layers that include a layer containing one or more of the above-listed polymer materials and a layer that contains one or more polymer materials different from those contained in the other layer, for example.

The hard coat layer 16 contributes to improvement of scratch resistance of the antireflection film 10. The hard coat layer 16 preferably has at least the pencil hardness H. The pencil hardness can be measured in accordance with JIS K5600-5-4. Known materials that are used as materials of a hard coat layer in a film such as an antireflection film provided on a touch panel can be used for the hard coat layer 16. The hard coat layer 16 is preferably constituted by a material that is obtained by curing a curable composition that contains an ultraviolet curable resin from the standpoint of scratch resistance and productivity, for example.

Examples of ultraviolet curable resins include monomers, oligomers, and prepolymers that include reactive groups that are reactive to ultraviolet rays. Examples of reactive groups that are reactive to ultraviolet rays include radical polymerization type reactive groups including ethylenically unsaturated bonds, such as an acryloyl group, a methacryloyl group, an allyl group, and a vinyl group, and cationic polymerization type reactive groups such as an oxetanyl group. Among these, an acryloyl group, a methacryloyl group, and an oxetanyl group are more preferable, and an acryloyl group and a methacryloyl group are particularly preferable. That is, (meth)acrylates are particularly preferable. Note that in the present specification, "(meth)acrylate" refers to "at least one of acrylate and methacrylate". "(Meth)acryloyl" refers to "at least one of acryloyl and methacryloyl". "(Meth)acryl" refers to "at least one of acryl and methacryl".

Examples of (meth)acrylates include urethane (meth)acrylate, silicone (meth)acrylate, alkyl (meth)acrylate, and allyl (meth)acrylate. Among these, urethane (meth)acrylate is particularly preferable from the standpoint of good flexibility, for example. If the curable composition for forming the hard coat layer 16 contains urethane (meth)acrylate as the ultraviolet curable resin, cracking of the substrate film 12 is likely to be suppressed even if the substrate film 12 is formed of polycycloolefin or a cycloolefin copolymer and is relatively liable to cracking.

The curable composition for forming the hard coat layer 16 may optionally contain a non-ultraviolet curable resin in addition to the ultraviolet curable resin. Also, the curable composition for forming the hard coat layer 16 may contain a photopolymerization initiator. Also, additives that are added to a curable composition may be contained as necessary. Examples of such additives include a dispersant, a leveling agent, an antifoaming agent, a thixotropic agent, an antifouling agent, an antibacterial agent, a flame retardant, a slipping agent, inorganic particles, and resin particles. Also, a solvent may be contained as necessary.

Examples of non-ultraviolet curable resins include thermoplastic resins and thermosetting resins. Examples of thermoplastic resins include polyester resin, polyether resin, polyolefin resin, and polyamide resin. Examples of thermosetting resins include unsaturated polyester resin, epoxy resin, alkyd resin, and phenolic resin.

Examples of photopolymerization initiators include alkylphenone-based photopolymerization initiators, acylphosphine oxide-based photopolymerization initiators, and oxime ester-based photopolymerization initiators. Examples of alkylphenone-based photopolymerization initiators include 2,2'-dimethoxy-1,2-diphenylethane- 1-one, 1-hydroxy-cyclohexyl-phenyl-ketone, 2-hydroxy-2-methyl-1-phenyl-propane-1-one, 1-[4-(2-hydroxyethoxy)-phenyl]-2-hydroxy-2-methyl-1-propane-1-one, 2-hydroxy-1-{4-[4-(2-hydroxy-2-methyl-propionyl)-benzyl]phenyl}-2-methyl-propane-1-one, 2-methyl-1-[4-(methylthio)phenyl]-2-morpholinopropane-1-one, 2-benzylmethyl-2-(dimethylamino)-1-(4-morpholinophenyl)-1-butanone, 2-(dimethylamino)-2-[(4-methylphenyl)methyl]-1-(4-morpholinophenyl)-1-butanone, 2-(4-methylbenzyl)-2-(dimethylamino)-1-(4-morpholinophenyl)-1-butanone, and N,N-dimethylaminoacetophenone. Examples of acylphosphine oxide-based photopolymerization initiators include 2,4,6-trimethylbenzoyl diphenylphosphine oxide, bis(2,4,6-trimethylbenzoyl)-phenylphosphine oxide, and bis(2,6-dimethoxybenzoyl)-2,4,4-trimethyl-pentylphosphine oxide. Examples of oxime ester-based photopolymerization initiators include 1,2-octanedion, 1-[4-(phenylthio)phenyl]-2-(O-benzoyloxime), and ethanone-1-[9-ethyl-6-(2-methylbenzoyl)-9H-carbazol-3-yl]-1-(O-acetyloxime). Any one of or a combination of two or more of these may be used as the photopolymerization initiator.

The amount of the photopolymerization initiator is preferably within a range of 0.1 to 10 mass% of a total solid content of the curable composition. The amount of the photopolymerization initiator is more preferably within a range of 1 to 5 mass%.

Inorganic particles and resin particles are added to the hard coat layer 16 to prevent blocking or adjust the second resin layer 16 so as to have a high refractive index, for example. Also, resin particles are added to the hard coat layer 16 to prevent blocking, for example. By forming minute surface irregularities in the hard coat layer 16, blocking, which is a phenomenon in which a front surface and a rear surface adhere to each other, is likely to be suppressed when a hard coat film that is constituted by the substrate film 12 and the hard coat layer 16 is wound into a roll before the first resin layer 14 is formed. If the hard coat layer 16 has a high refractive index, an antireflection function can be further enhanced when the first resin layer 14 is layered. "High refractive index" refers to a refractive index of at least 1.50 when the measurement wavelength is 589.3 nm, and is preferably within a range of 1.55 to 1.80, and more preferably within a range of 1.60 to 1.70.

Examples of inorganic particles that can be used for optical adjustment to achieve the high refractive index include metal oxide particles that are made of oxides of metals such as titanium, zirconium, tin, zinc, silicon, niobium, aluminum, chromium, magnesium, germanium, gallium, antimony, and platinum. Particles of any one of or a combination of two or more of these metal oxides may be used as inorganic particles that can be used for optical adjustment. Among these, titanium oxide and zirconium oxide are particularly preferable from the standpoint of achieving both the high refractive index and transparency. Examples of resin particles include resin particles that are made of resins such as (meth)acrylic resin, styrene resin, styrene-(meth)acrylic resin, urethane resin, polyamide resin, silicone resin, epoxy resin, phenolic resin, polyethylene resin, and cellulose. Particles of any one of or a combination of two or more of these resins may be used as resin particles.

The thickness of the hard coat layer 16 is not particular limited, but is preferably at least 0.5 pm from the standpoint of making the hard coat layer sufficiently hard, for example. The thickness is more preferably at least 0.75 µm. Also, the thickness is preferably no greater than 10 pm from the standpoint of suppressing curling due to a difference in thermal contraction between the hard coat layer and the substrate film 12, for example. The thickness is more preferably no greater than 5 pm. The thickness of the hard coat layer 16 refers to the thickness of a relatively smooth portion in a region of the hard coat layer where there are no irregularities formed by inorganic particles or resin particles in the thickness direction.

The arithmetic average roughness Ra of a surface of the hard coat layer 16 in which surface irregularities are formed is preferably within a range of 0.3 to 20 nm from the standpoint of blocking, for example. The arithmetic average roughness is more preferably within a range of 0.5 to 10 nm.

Examples of solvents that can be used in the curable composition for forming the hard coat layer 16 include alcohol-based solvents such as ethanol, isopropyl alcohol (IPA), n-butyl alcohol (NBA), ethylene glycol monomethyl ether (EGM), ethylene glycol monoisopropyl ether (IPG), propylene glycol monomethyl ether (PGM), and diethylene glycol monobutyl ether, ketone-based solvents such as methyl ethyl ketone (MEK), methyl isobutyl ketone (MIBK), cyclohexanone, and acetone, aromatic solvents such as toluene and xylene, ester-based solvents such as ethyl acetate (EtAc), propyl acetate, isopropyl acetate, and butyl acetate (BuAc), and amide-based solvents such as N-methylpyrrolidone, acetamide, and dimethylformamide. Any one of or a combination of two or more of these may be used as the solvent.

It is possible to set the solid content concentration (concentration of components other than the solvent) of the curable composition as appropriate, taking ease of coating, the film thickness, and the like into consideration. The solid content concentration can be set to 1 to 90 mass%, 1.5 to 80 mass%, or 2 to 70 mass%, for example.

The first resin layer 14 contains large particles 18, hollow silica particles 22, and a binder resin.

The binder resin is not particularly limited, but is preferably a cured material of a thermosetting compound or a cured material of an ultraviolet curable compound from the standpoint of scratch resistance of the first resin layer 14, for example. A cured material of an ultraviolet curable compound is more preferable from the standpoint of productivity, for example.

Examples of ultraviolet curable resins include monomers, oligomers, and prepolymers that include reactive groups that are reactive to ultraviolet rays. Examples of reactive groups that are reactive to ultraviolet rays include radical polymerization type reactive groups including ethylenically unsaturated bonds, such as an acryloyl group, a methacryloyl group, an allyl group, and a vinyl group, and cationic polymerization type reactive groups such as an oxetanyl group. Among these, an acryloyl group, a methacryloyl group, and an oxetanyl group are more preferable, and an acryloyl group and a methacryloyl group are particularly preferable. That is, (meth)acrylates are particularly preferable.

Examples of (meth)acrylates include urethane (meth)acrylate, silicone (meth)acrylate, alkyl (meth)acrylate, and allyl (meth)acrylate. It is possible to use only a monofunctional (meth)acrylate, a multifunctional (meth)acrylate, or a combination of a monofunctional(meth)acrylate and a multifunctional (meth)acrylate. It is more preferable to include a multifunctional (meth)acrylate.

Examples of monofunctional (meth)acrylates include methyl (meth)acrylate, ethyl (meth)acrylate, propyl (meth)acrylate, isopropyl (meth)acrylate, butyl (meth)acrylate, amyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, isostearyl (meth)acrylate, isobornyl (meth)acrylate, 1-adamantyl (meth)acrylate, 2-methyl-2-adamantyl (meth)acrylate, 2-ethyl-2-adamantyl (meth)acrylate, bornyl (meth)acrylate, tricyclodecanyl (meth)acrylate, dicyclopentanyl (meth)acrylate, dicyclopentenyl (meth)acrylate, cyclohexyl (meth)acrylate, benzyl (meth)acrylate, 1-naphthylmethyl (meth)acrylate, 2-naphthylmethyl (meth)acrylate, phenoxyethyl (meth)acrylate, phenoxy-2-methylethyl (meth)acrylate, phenoxyethoxyethyl (meth)acrylate, 3-phenoxy-2-hydroxypropyl (meth)acrylate, 2-phenylphenoxyethyl (meth)acrylate, 4-phenylphenoxyethyl (meth)acrylate, 3-(2-phenylphenyl)-2-hydroxypropyl (meth)acrylate, 2-hydroxyethyl (meth)acrylate, 2-hydroxypropyl (meth)acrylate, 2-hydroxybutyl (meth)acrylate, tetrahydrofurfuryl (meth)acrylate, butoxyethyl (meth)acrylate, ethoxydiethylene glycol (meth)acrylate, polyethylene glycol mono(meth)acrylate, polypropylene glycol mono(meth)acrylate, methoxyethylene glycol (meth)acrylate, ethoxyethyl (meth)acrylate, methoxypolyethylene glycol (meth)acrylate, and methoxypolypropylene glycol (meth)acrylate.

Examples of multifunctional (meth)acrylates include bifunctional (meth)acrylates, trifunctional (meth)acrylates, and tetrafunctional (meth)acrylates. More specific examples include 1,4-butanediol di(meth)acrylate, 1,6-hexanediol di(meth)acrylate, 1,9-nonanediol di(meth)acrylate, ethylene glycol di(meth)acrylate, diethylene glycol di(meth)acrylate, neopentyl glycol di(meth)acrylate, triethylene glycol di(meth)acrylate, tetraethylene glycol di(meth)acrylate, polyethylene glycol di(meth)acrylate, trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, tripentaerythritol tetra(meth)acrylate, tripentaerythritol penta(meth)acrylate, tripentaerythritol hexa(meth)acrylate, tripentaerythritol hepta(meth)acrylate, and trip entaerythritol octa(meth)acrylate.

The large particles 18 contained in the first resin layer 14 form raised portions in the surface of the first resin layer 14. The first resin layer 14 can have a favorable kinetic friction coefficient (pk) due to the raised portions being formed in the surface of the first resin layer 14 by the large particles 18.

The large particles 18 may be solid particles or hollow particles. Solid particles are particles that substantially do not include cavities therein, and the ratio of cavities in the solid particles is less than 5% of the volume of the solid particles. Hollow particles are particles that include cavities therein, and the ratio of the cavities in the hollow particles is at least 5% of the volume of the hollow particles. If the large particles 18 are hollow particles, it is possible to reduce the refractive index of the first resin layer 14 and suppress reflection of light. The ratio of cavities in the hollow particles is preferably 10% to 80% of the volume of the hollow particles. The ratio is more preferably 20% to 60%, and further preferably 30% to 60%. If the ratio of cavities is at least 10%, it is possible to reduce the refractive index and suppress reflection of light. If the ratio of cavities is no greater than 80%, it is possible to suppress a reduction in dispersibility of the large particles 18.

The large particles 18 may be inorganic particles or organic particles. Examples of inorganic particles include metal oxide particles that are made of oxides of metals such as titanium, zirconium, silicon, aluminum, and calcium. Particles of any one of or a combination of two or more of these metal oxides may be used as inorganic particles. Examples of resin particles include resin particles that are made of resins such as (meth)acrylic resin, styrene resin, styrene-(meth)acrylic resin, urethane resin, polyamide resin, silicone resin, epoxy resin, phenolic resin, polyethylene resin, and cellulose. Particles of any one of or a combination of two or more of these resins may be used as resin particles. Among these, inorganic particles are preferable, and silica particles are particularly preferable from the standpoint of low refractive index and excellent transparency.

The shape of the large particles 18 is not particularly limited, and may be a spherical shape, a needle-like shape, a scale-like shape, a rod-like shape, a fibrous shape, an amorphous shape, or the like. Among these, a spherical shape is preferable.

The average particle size of the large particles 18 is preferably greater than or equal to the average thickness of the first resin layer 14 from the standpoint of facilitating formation of raised portions in the surface of the first resin layer 14, for example. On the other hand, the average particle size of the large particles 18 is preferably no greater than 1.2 times the average thickness of the first resin layer 14 from the standpoint of maintaining transparency by suppressing the height of raised portions to be formed, for example. The average particle size of the large particles 18 is more preferably no greater than 1.1 times the average thickness of the first resin layer 14. The average particle size of the large particles 18 depends on the average thickness of the first resin layer 14, but is preferably within a range of 60 to 400 nm. The average particle size is more preferably within a range of 70 to 200 nm, and further preferably within a range of 80 to 160 nm. The average particle size is an arithmetic average value that is calculated on the volume basis using a laser diffraction scattering method in accordance with JIS Z8825.

The amount of the large particles 18 is preferably within a range of 1.0 to 3.5 mass% of the total mass of the first resin layer 14. If the amount of the large particles 18 is at least 1.0 mass%, in particular, the kinetic friction coefficient (µk) can be suppressed to improve the ease of finger sliding. From this standpoint, the amount of the large particles 18 is more preferably at least 1.5 mass%, and further preferably at least 1.9 mass% of the total mass of the first resin layer 14. On the other hand, if the amount of the large particles 18 is no greater than 3.5 mass%, high transparency can be achieved. From this standpoint, the amount of the large particles 18 is more preferably no greater than 2.3 mass%, and further preferably no greater than 2.2 mass% of the total mass of the first resin layer 14.

The hollow silica particles 22 are particles that have a smaller average particle size than the large particles 18 that form raised portions in the surface of the first resin layer 14. The hollow silica particles 22 substantially do not contribute to the formation of surface irregularities of the first resin layer 14. The hollow silica particles 22 include cavities therein, and the ratio of the cavities in the hollow silica particles is at least 5% of the volume of the hollow silica particles. Hollow means a core-shell structure that is constituted by an outer shell and a cavity inside the shell, or a porous structure that includes many cavities. Due to the hollow silica particles 22 having a hollow structure, the refractive index of the first resin layer 14 can be reduced to suppress reflection of light. The shape of the hollow silica particles 22 is not particularly limited, but is preferably a spherical shape, a spindle-like shape, an egg-like shape, a flat plate shape, a cube shape, an amorphous shape, or the like. Among these, a spherical shape, a flat plate shape, and a cube shape are particularly preferable, for example.

As a result of the hollow silica particles 22 being contained in the first resin layer 14 together with the large particles 18, it is possible to reduce the static friction coefficient (ps) that may cause a sense of the finger being caught at the beginning of a finger sliding operation, without impairing transparency. If the first resin layer 14 contains only large particles 18, transparency is insufficient although the ease of finger sliding is excellent. If the first resin layer 14 contains only hollow silica particles 22 having a smaller average particle size than the large particles 18, the first resin layer 14 has sufficiently high transparency, but has a large kinetic friction coefficient (pk) and a large static friction coefficient (µs), and therefore, the ease of finger sliding is insufficient. The ease of finger sliding is not significantly improved even if components such as an antifouling agent are added to the first resin layer 14, for example. As a result of the first resin layer 14 containing the hollow silica particles 22 in a predetermined amount together with the large particles 18, both transparency and ease of finger sliding can be realized. The hollow silica particles 22 are arranged between the large particles 18 and also serve to suppress agglomeration of the large particles 18. Thus, a reduction in dispersibility of the large particles 18, which are contained in a small amount in the first resin layer 14, is suppressed, and this is considered as a factor of both transparency and ease of finger sliding being realized.

The ratio of cavities in the hollow silica particles 22 is preferably 10% to 80% of the volume of the hollow silica particles. The ratio of cavities is more preferably 20% to 60% of the volume, and further preferably 30% to 60% of the volume. If the ratio of cavities is at least 10% of the volume, it is possible to reduce the refractive index and suppress reflection of light. If the ratio of cavities is no greater than 80% of the volume, it is possible to suppress a reduction in dispersibility of the hollow silica particles 22.

The average particle size of the hollow silica particles 22 is preferably smaller than the average thickness of the first resin layer 14 from the standpoint of the hollow silica particles 22 substantially not contributing to the formation of surface irregularities of the first resin layer 14. The average particle size of the hollow silica particles 22 depends on the average thickness of the first resin layer 14, but is preferably within a range of 5 to 100 nm. The average particle size is more preferably within a range of 20 to 800 nm, and further preferably within a range of 40 to 700 nm. If the average particle size of the hollow silica particles 22 is within these preferable ranges, an excellent antireflection effect and transparency of the first resin layer 14 can be achieved. The average particle size is an arithmetic average value that is calculated on the volume basis using the laser diffraction scattering method in accordance with JIS Z8825.

The refractive index of the hollow silica particles 22 is preferably within a range of 1.01 to 1.45. The refractive index is more preferably within a range of 1.15 to 1.38, and further preferably within a range of 1.15 to 1.35. If the refractive index is within the above ranges, an excellent antireflection effect can be achieved.

The amount of the hollow silica particles 22 is preferably within a range of 30 to 70 mass% of the total mass of the first resin layer 14. If the amount of the hollow silica particles 22 is at least 30 mass%, the static friction coefficient (ps) can be further reduced so that the sense of the finger being caught will be less likely to be felt at the beginning of a finger sliding operation, and haze can be reduced to increase transparency. From this standpoint, the amount of the hollow silica particles 22 is more preferably at least 35 mass%, and further preferably at least 40 mass% of the total mass of the first resin layer 14. On the other hand, if the amount of the hollow silica particles 22 is no greater than 70 mass%, it is possible to suppress a reduction in hardness of the first resin layer 14. From this standpoint, the amount of the hollow silica particles 22 is more preferably no greater than 65 mass%, and further preferably no greater than 62 mass% of the total mass of the first resin layer 14.

The average thickness of the first resin layer 14 is preferably within a range of 40 to 160 nm, more preferably within a range of 70 to 140 nm, and further preferably within a range of 80 to 120 nm. If the average thickness is within the above ranges, it is possible to achieve a good luminous reflectance to suppress reflection of light. The average thickness of the first resin layer 14 is the thickness of a relatively smooth portion in a region of the first resin layer where the large particles 18 are absent in the thickness direction.

The first resin layer 14 preferably further contains a polysiloxane. If the first resin layer 14 further contains a polysiloxane, the ease of finger sliding of the first resin layer 14 is improved. From the standpoint of improving the ease of finger sliding, the polysiloxane is preferably liquid at 25°C. Also, it is preferable that the polysiloxane does not include a photopolymerizable functional group such as a (meth)acryloyl group so that the polysiloxane will not be fixed in the binder resin through polymerization, from the standpoint of facilitating precipitation of the polysiloxane on the surface side of the first resin layer 14 to make it easier for the polysiloxane to contribute to improvement of the ease of finger sliding.

Examples of polysiloxanes include polydimethylsiloxane (unmodified polydimethylsiloxane), polymethylalkylsiloxane (unmodified polymethylalkylsiloxane), polyether-modified polysiloxanes such as polyether-modified polydimethylsiloxane, polyester-modified polysiloxanes such as polyester-modified polydimethylsiloxane, amino-modified polysiloxanes such as amino-modified polydimethylsiloxane, phenyl-modified polysiloxanes such as phenyl-modified polydimethylsiloxane, long-chain alkyl-modified polysiloxanes such as long-chain alkyl-modified polydimethylsiloxane having 4 or more carbon atoms, and fluoroalkyl-modified polysiloxanes such as fluoroalkyl-modified polydimethylsiloxane. Any one of or a combination of two or more of these may be used as the polysiloxane. Among these, polyether-modified polysiloxanes have a particularly excellent effect of improving the ease of finger sliding, and therefore are particularly preferable.

Examples of polyether-modified polysiloxanes include "Leveling Agent F" manufactured by Aica Kogyo Company, Limited, "DOWSIL 11 Additive", "DOWSIL 14 Additive", "DOWSIL 29 Additive", "DOWSIL 54 Additive", "XIAMETER OFX-0190 Fluid", "XIAMETER OFX-0193 Fluid", "DOWSIL 204SL", and "DOWSIL 205SL" manufactured by Toray Dow Corning, Co., Ltd., "DISPARLON LS-460" and "DISPARLON LS-480" manufactured by Kusumoto Chemicals, Ltd., "CoatOSil 2812", "CoatOSil 2816", "CoatOSil 3500", "CoatOSil 3501", "CoatOSil 3505", and "CoatOSil 3575" manufactured by Momentive Performance Materials Japan LLC.

The polysiloxane preferably has a viscosity of 10 to 3000 mPa ·s at 25°C. The viscosity is more preferably 80 to 1500 Pa ·s. If the viscosity is within the above ranges, a particularly excellent effect of improving the ease of finger sliding can be achieved. The viscosity is measured using a coaxial cylinder viscometer.

The amount of the polysiloxane is preferably at least 0.05 mass% of the total mass of the first resin layer 14 from the standpoint of achieving an excellent effect of improving the ease of finger sliding. The amount of the polysiloxane is more preferably at least 1.0 mass%, further preferably at least 5 mass%, and particularly preferably at least 9 mass%. Also, the amount of the polysiloxane is preferably no greater than 25 mass% of the total mass of the first resin layer 14 from the standpoint of suppressing a reduction in an antireflection property. The amount of the polysiloxane is more preferably no greater than 20 mass%, and further preferably no greater than 15 mass%.

Even if the amount of the polysiloxane is as large as at least 5 mass% of the total mass of the first resin layer 14, stickiness can be suppressed due to the first resin layer 14 containing the hollow silica particles 22 at a relatively high concentration. Therefore, a reduction in the ease of finger sliding can be suppressed.

The first resin layer 14 may also contain additives or the like that are added to a curable composition, as necessary. Examples of such additives include an antifouling agent, a dispersant, a leveling agent, an antifoaming agent, a thixotropic agent, an antibacterial agent, a flame retardant, a slipping agent, and a refractive index adjusting agent. Also, the first resin layer 14 may optionally contain a non-ultraviolet curable resin in addition to an ultraviolet curable resin.

Examples of antifouling agents include fluorine-containing compounds. Examples of fluorine-containing compounds include (meth)acrylates including perfluoroalkyl groups. Examples of such compounds include "KY-1203" manufactured by Shin-Etsu Chemical Co., Ltd., "MEGAFACE RS-75" manufactured by DIC Corporation, "OPTOOL DAC-HP" manufactured by Daikin Industries, Ltd., and "FTERGENT 601AD" manufactured by NEOS COMPANY LIMITED. Such a fluorine-containing compound can suppress adhesion of dirt and fingerprints and facilitate removal of dirt and fingerprints.

The amount of the fluorine-containing compound is preferably within a range of 0.01 to 15 mass% of the total mass of the first resin layer 14. The amount of the fluorine-containing compound is more preferably within a range of 0.05 to 10 mass%, and further preferably within a range of 0.2 to 5 mass%. If the amount of the fluorine-containing compound is within the preferable ranges, an excellent antifouling property and an excellent anti-fingerprint property can be achieved and a reduction in scratch resistance can be suppressed.

Examples of non-ultraviolet curable resins include thermoplastic resins and thermosetting resins. Examples of thermoplastic resins include polyester resin, polyether resin, polyolefin resin, and polyamide resin. Examples of thermosetting resins include unsaturated polyester resin, epoxy resin, alkyd resin, and phenolic resin.

The first resin layer 14 can be formed using a composition that contains the large particles 18, the hollow silica particles 22, and the binder resin. In a case where the composition for forming the first resin layer 14 contains an ultraviolet curable resin as the binder resin, the composition preferably contains a photopolymerization initiator. The composition for forming the first resin layer 14 may also contain a solvent as necessary.

Examples of photopolymerization initiators include alkylphenone-based photopolymerization initiators, acylphosphine oxide-based photopolymerization initiators, and oxime ester-based photopolymerization initiators. Examples of alkylphenone-based photopolymerization initiators include 2,2'-dimethoxy-1,2-diphenylethane- 1-one, 1-hydroxy-cyclohexyl-phenyl-ketone, 2-hydroxy-2-methyl-1-phenyl-propane-1-one, 1-[4-(2-hydroxyethoxy)-phenyl]-2-hydroxy-2-methyl-1-propane-1-one, 2-hydroxy-1-{4-[4-(2-hydroxy-2-methyl-propionyl)-benzyl]phenyl}-2-methyl-propane-1-one, 2-methyl-1-[4-(methylthio)phenyl]-2-morpholinopropane-1-one, 2-benzylmethyl-2-(dimethylamino)-1-(4-morpholinophenyl)-1-butanone, 2-(dimethylamino)-2-[(4-methylphenyl)methyl]-1-(4-morpholinophenyl)-1-butanone, 2-(4-methylbenzyl)-2-(dimethylamino)-1-(4-morpholinophenyl)-1-butanone, and N,N-dimethylaminoacetophenone. Examples of acylphosphine oxide-based photopolymerization initiators include 2,4,6-trimethylbenzoyl diphenylphosphine oxide, bis(2,4,6-trimethylbenzoyl)-phenylphosphine oxide, and bis(2,6-dimethoxybenzoyl)-2,4,4-trimethyl-pentylphosphine oxide. Examples of oxime ester-based photopolymerization initiators include 1,2-octanedion, 1-[4-(phenylthio)phenyl]-2-(O-benzoyloxime), and ethanone-1-[9-ethyl-6-(2-methylbenzoyl)-9H-carbazol-3-yl]-1-(O-acetyloxime). Any one of or a combination of two or more of these may be used as the photopolymerization initiator.

The amount of the photopolymerization initiator is preferably within a range of 0.1 to 10 mass% of the total solid content of the composition for forming the first resin layer 14. The amount of the photopolymerization initiator is more preferably within a range of 1 to 5 mass%.

Examples of solvents that can be used in the composition for forming the first resin layer 14 include alcohol-based solvents such as ethylene glycol monomethyl ether (EGM), propylene glycol monomethyl ether (PGM), and diethylene glycol monobutyl ether, ketone-based solvents such as methyl ethyl ketone (MEK), methyl isobutyl ketone (MIBK), cyclohexanone, and acetone, aromatic solvents such as toluene and xylene, and amide-based solvents such as N-methylpyrrolidone, acetamide, and dimethylformamide. Any one of or a combination of two or more of these may be used as the solvent.

The antireflection film 10 can be manufactured by applying a composition for forming the hard coat layer 16 to a surface of the substrate film 12, drying the composition as necessary, and then curing the composition through ultraviolet irradiation to form the hard coat layer 16 on the surface of the substrate film 12, thereafter applying a composition for forming the first resin layer 14 to a surface of the hard coat layer 16, drying the composition as necessary, and then curing the composition through ultraviolet irradiation to form the first resin layer 14 on the surface of the hard coat layer 16. At this time, in order to improve adhesion between the substrate film 12 and the hard coat layer 16, it is also possible to perform surface treatment on the surface of the substrate film 12 before applying the composition for forming the hard coat layer 16. Examples of the surface treatment include corona treatment, plasma treatment, hot air treatment, ozone treatment, and ultraviolet treatment.

The composition for forming the hard coat layer 16 and the composition for forming the first resin layer 14 can be applied using various coating methods such as reverse gravure coating, direct gravure coating, die coating, bar coating, wire bar coating, roll coating, spin coating, dip coating, spray coating, knife coating, and kiss coating, and various printing methods such as an inkjet method, offset printing, screen printing, and flexo printing.

There is no particular limitation to the drying steps so long as solvents or the like that are used in the applied solutions can be removed, but it is preferable to perform the drying steps at a temperature of 50°C to 150°C for about 10 to 180 seconds. The drying temperature is particularly preferably 50 to 120°C.

Ultraviolet irradiation can be performed using a high-pressure mercury lamp, an electrodeless (microwave) lamp, a xenon lamp, a metal halide lamp, or any other suitable ultraviolet irradiation device. Ultraviolet irradiation may be performed in an atmosphere of an inert gas such as nitrogen, as necessary. The ultraviolet irradiation amount is not particularly limited, but is preferably 50 to 800 mJ/cm², and more preferably 100 to 300 mJ/cm².

The kinetic friction coefficient (pk) of the surface of the first resin layer 14 is preferably no greater than 1.2, more preferably no greater than 1.0, and further preferably no greater than 0.7 from the standpoint of achieving ease of finger sliding such that it is possible to continuously slide a finger smoothly. Also, the static friction coefficient (µs) of the surface of the first resin layer 14 is preferably no greater than 1.4, more preferably no greater than 1.2, and further preferably no greater than 1.0 from the standpoint of achieving ease of finger sliding such that the sense of the finger being caught will not be felt at the beginning of a finger sliding operation.

A two-dimensional arithmetic average roughness Ra of the surface of the first resin layer 14 is preferably 3.0 to 30 nm, more preferably 6.0 to 20 nm, and further preferably 12 to 20 nm from the standpoint of achieving great ease of finger sliding.

Haze of the antireflection film 10 is preferably no greater than 2.3, more preferably no greater than 2.0, and further preferably no greater than 1.5 from the standpoint of good visibility, for example.

In the antireflection film 10 configured as described above, the first resin layer 14 formed over the surface of the substrate film 12 contains the large particles 18 that form raised portions in the surface of the first resin layer 14, and the hollow silica particles 22 having a smaller average particle size than the large particles 18, and therefore, it is possible to smoothly perform a finger sliding operation without feeing the sense of the finger being caught at the beginning of the operation, and the antireflection film has excellent transparency. Also, due to the first resin layer 14 containing the hollow silica particles 22, the first resin layer 14 has a low refractive index and an excellent antireflection function. Also, if the first resin layer 14 further contains a polysiloxane, the ease of finger sliding can be improved while excellent transparency is maintained. Furthermore, scratch resistance can be improved due to the hard coat layer 16 provided between the substrate film 12 and the first resin layer 14.

The antireflection film according to the present invention is not limited to the configuration of the antireflection film 10 according to the first embodiment. The following describes other embodiments of the antireflection film according to the present invention.

Fig. 2 shows an antireflection film 20 according to a second embodiment. The antireflection film 20 according to the second embodiment includes the substrate film 12 and the first resin layer 14 formed over the surface of the substrate film 12. The antireflection film 20 includes the substrate film 12 and the first resin layer 14 layered in this order from the substrate film 12 side.

The antireflection film 20 according to the second embodiment differs from the antireflection film 10 according to the first embodiment in that the antireflection film 20 does not include the hard coat layer 16 between the substrate film 12 and the first resin layer 14, but is the same as the antireflection film 10 in the other aspects, and descriptions of the same structures are omitted.

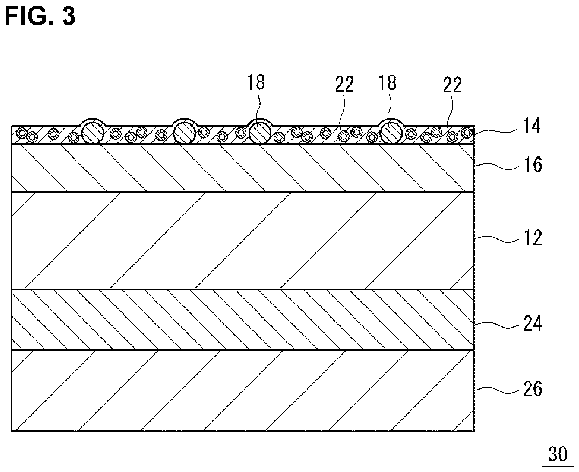

Fig. 3 shows an antireflection film 30 according to a third embodiment. The antireflection film 30 according to the third embodiment includes the substrate film 12, the first resin layer 14 formed over a surface of the substrate film 12, and the hard coat layer 16 formed between the substrate film 12 and the first resin layer 14. The antireflection film 30 also includes a transparent adhesive layer 24 on the other surface of the substrate film 12. A release film 26 is provided on a surface of the transparent adhesive layer 24, as necessary. The release film 26 serves as a protective layer for the transparent adhesive layer 24 before use, and is separated from the transparent adhesive layer 24 when the antireflection film is used.

The antireflection film 30 according to the third embodiment differs from the antireflection film 10 according to the first embodiment in that the antireflection film 30 includes the transparent adhesive layer 24 on the other surface of the substrate film 12, but is the same as the antireflection film 10 in the other aspects, and descriptions of the same structures are omitted.

The transparent adhesive layer 24 is for attaching the antireflection film 30 to a display surface of a touch panel with good adhesiveness. Also, due to including the transparent adhesive layer 24, the antireflection film 30 has an effect of preventing shattering of glass that constitutes the display of the touch panel. That is, the antireflection film 30 also serves as an anti-shattering film.

An adhesive composition that forms the transparent adhesive layer 24 may contain known adhesive resins such as an acrylic-based adhesive, a silicone-based adhesive, and a urethane-based adhesive. Among these, an acrylic-based adhesive is preferable from the standpoint of optical transparency and heat resistance. The adhesive composition preferably contains a crosslinking agent in order to increase a cohesive force of the transparent adhesive layer 24. Examples of crosslinking agents include an isocyanate-based crosslinking agent, an epoxy-based crosslinking agent, an aziridine-based crosslinking agent, and a chelate-based crosslinking agent.

The adhesive composition may also contain additives as necessary. Examples of additives include known additives such as a plasticizer, a silane coupling agent, a surfactant, an antioxidant, a filler, a curing accelerator, and a curing retarder. Also, the adhesive composition may be diluted with an organic solvent from the standpoint of productivity and the like.

The thickness of the adhesive layer 22 is not particularly limited, but is preferably within a range of 5 to 100 pm. The thickness is more preferably within a range of 10 to 50 pm.

The transparent adhesive layer 24 can be formed by a method of directly applying the adhesive composition to the other surface of the substrate film 12, a method of applying the adhesive composition to a surface of the release film 26 to form the adhesive layer 24 and thereafter transferring the adhesive layer 24 to the other surface of the substrate film 12, or a method of applying the adhesive composition to a surface of a first release film to form the adhesive layer 24, attaching a second release film to the adhesive layer 24, and transferring the adhesive layer 24 to the other surface of the substrate film 12 by separating either one of the release films, for example.

An adhesive force of the transparent adhesive layer 24 with respect to glass is preferably at least 4 N/25 mm from the standpoint of the effect of preventing shattering of glass. The adhesive force is more preferably at least 6 N/25 mm, and further preferably at least 10 N/25 mm.

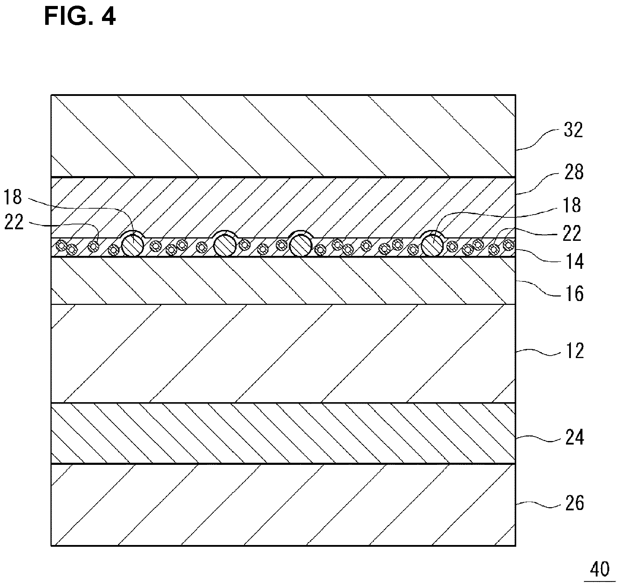

Fig. 4 shows an antireflection film 40 according to a fourth embodiment. The antireflection film 40 according to the fourth embodiment includes the substrate film 12, the first resin layer 14 formed over a surface of the substrate film 12, the hard coat layer 16 formed between the substrate film 12 and the first resin layer 14, and a protective film 32 formed over a surface of the first resin layer 14 with an adhesive layer 28 interposed therebetween. The antireflection film 40 also includes the transparent adhesive layer 24 on the other surface of the substrate film 12. The release film 26 is provided on a surface of the transparent adhesive layer 24, as necessary.

The antireflection film 40 according to the fourth embodiment differs from the antireflection film 30 according to the third embodiment in that the antireflection film 40 includes the protective film 32 on the surface of the first resin layer 14 with the adhesive layer 28 interposed therebetween, but is the same as the antireflection film 30 according to the third embodiment in the other aspects, and descriptions of the same structures are omitted.

The protective film 32 can keep the surface of the first resin layer 14 from being damaged when the antireflection film is handled in continuous processing such as a roll process or when the antireflection film is attached to a touch panel, for example. The protective film 32 is attached to the surface of the first resin layer 14 with the adhesive layer 28 interposed therebetween. The protective film 32 is separated from the surface of the first resin layer 14 together with the adhesive layer 28 after processing or the like. Therefore, the adhesive layer 28 is adjusted such that an adhesive force that acts between the protective film 32 and the adhesive layer 28 is stronger than an adhesive force that acts between the first resin layer 14 and the adhesive layer 28, and the first resin layer 14 and the adhesive layer 28 can be separated at an interface therebetween.

The material of the protective film 32 can be appropriately selected from the examples of the material of the substrate film 12, for example. The thickness of the protective film 24 is not particularly limited, but can be set to be within a range of 2 to 500 pm or 2 to 200 pm.

An adhesive that forms the adhesive layer 22 is not particularly limited, and an acrylic-based adhesive, a silicone-based adhesive, a urethane-based adhesive, or the like can be preferably used. In particular, an acrylic-based adhesive has excellent transparency and heat resistance, and therefore is preferable. The acrylic-based adhesive is preferably made of an adhesive composition that contains a (meth)acrylic polymer and a crosslinking agent.

The (meth)acrylic polymer is a homopolymer or copolymer of (meth)acrylic monomers. Examples of (meth)acrylic monomers include alkyl group-containing (meth)acrylic monomers, carboxyl group-containing (meth)acrylic monomers, and hydroxyl group-containing (meth)acrylic monomers.

Examples of alkyl group-containing (meth)acrylic monomers include (meth)acrylic monomers having an alkyl group having 2 to 30 carbon atoms. The alkyl group having 2 to 30 carbon atoms may be linear, branched chain, or cyclic. More specific examples of alkyl group-containing (meth)acrylic monomers include isostearyl (meth)acrylate, stearyl (meth)acrylate, lauryl (meth)acrylate, dodecyl (meth)acrylate, decyl (meth)acrylate, isononyl (meth)acrylate, nonyl (meth)acrylate, isooctyl (meth)acrylate, octyl (meth)acrylate, isobutyl (meth)acrylate, n-butyl (meth)acrylate, pentyl (meth)acrylate, hexyl (meth)acrylate, cyclohexyl (meth)acrylate, 2-ethylhexyl (meth)acrylate, propyl (meth)acrylate, ethyl (meth)acrylate, and methyl (meth)acrylate.

Examples of carboxyl group-containing (meth)acrylic monomers include (meth) acrylic acid, carboxyethyl (meth)acrylate, and carboxypentyl (meth)acrylate. The carboxyl group may be located at the end of the alkyl chain or in the middle of the alkyl chain.

Examples of hydroxyl group-containing (meth)acrylic monomers include hydroxylauryl (meth)acrylate, hydroxydecyl (meth)acrylate, hydroxyoctyl (meth)acrylate, hydroxyhexyl (meth)acrylate, hydroxybutyl (meth)acrylate, hydroxypropyl (meth)acrylate, and hydroxyethyl (meth)acrylate. The hydroxyl group may be located at the end of the alkyl chain or in the middle of the alkyl chain.

The (meth)acrylic polymer may be formed by any one type of or a combination of two or more types of the above-listed (meth)acrylic monomers.

Examples of crosslinking agents include an isocyanate-based crosslinking agent, an epoxy-based crosslinking agent, a metal chelate-based crosslinking agent, a metal alkoxide-based crosslinking agent, a carbodiimide-based crosslinking agent, an oxazoline-based crosslinking agent, an aziridine-based crosslinking agent, and a melamine-based crosslinking agent. Any one of or a combination of two or more of these may be used as the crosslinking agent.

The adhesive composition may also contain other additives in addition to the (meth)acrylic polymer and the crosslinking agent. Examples of other additives include a crosslinking accelerator, a crosslinking retarder, an adhesiveness imparting resin (tackifier), an antistatic agent, a silane coupling agent, a plasticizer, a release aiding agent, a pigment, a dye, a humectant, a thickener, an ultraviolet absorbing agent, an antiseptic agent, an antioxidant, a metal deactivator, an alkylating agent, and a flame retardant. These additives are appropriately selected and used according to an intended use or the purpose of use of the adhesive.

The thickness of the adhesive layer 22 is not particularly limited, but is preferably within a range of 1 to 10 pm. The thickness is more preferably within a range of 2 to 7 pm.

Although embodiments of the present invention have been described, the present invention is not limited to the above embodiments, and various changes can be made within a scope not departing from the gist of the present invention.

For example, as described in the above embodiments, surface treatment may be performed on the surface of the substrate film 12, but a configuration is also possible in which an easy adhesive layer is provided on the surface of the substrate film 12, instead of surface treatment.

Also, in the above embodiments, surface irregularities are formed in the first resin layer 14 by the large particles 18 that have an average particle size greater than or equal to the average thickness of the first resin layer 14, but even if the average particle size of the large particles 18 is smaller than the average thickness of the first resin layer 14, surface irregularities can be formed in the first resin layer 14 by the large particles 18 if the large particles 18 are locally distributed at the surface of the first resin layer 14 by performing surface treatment on the large particles 18 or using a surfactant together with the large particles 18 to reduce a surface free energy of the large particles 18, for example.

Also, the antireflection film 10 according to the first embodiment shown in Fig. 1 includes the substrate film 12, the hard coat layer 16, and the first resin layer 14 that are layered in this order, but the antireflection film according to the present invention may include, between the hard coat layer 16 and the first resin layer 14, a high-refractive-index layer that has a higher refractive index than the hard coat layer 16 and the first resin layer 14 of the antireflection film 10. The refractive index is measured at a measurement wavelength of 589.3 nm. The high-refractive-index layer can be formed using a material similar to the material used for the hard coat layer 16. The refractive index of the high-refractive-index layer measured at the measurement wavelength of 589.3 nm is preferably within a range of 1.55 to 1.80, and more preferably within a range of 1.60 to 1.70. The thickness of the high-refractive-index layer varies depending on the refractive index, but if the thickness is at least 50 nm and no greater than 200 nm, for example, the antireflection function can be further enhanced.

As shown in Fig. 4, the above-described protective film 32 is added to the antireflection film 30 according to the third embodiment shown in Fig. 3, but may also be added to the antireflection film 10 according to the first embodiment shown in Fig. 1 or the antireflection film 20 according to the second embodiment shown in Fig. 2.

Furthermore, various functional layers such as a gas barrier property improving layer, an antistatic layer, and an oligomer block layer may be provided on the surface of the substrate film 12 in advance to the formation of each layer.

### Examples

The following describes the present invention in detail using examples and comparative examples.

### Preparation of composition 1 for forming hard coat layer

A composition 1 for forming a hard coat layer was prepared by adding propylene glycol monomethyl ether (PGM) to an ultraviolet curable resin composition Z-735-3L (manufactured by Aica Kogyo Company, Limited, (meth)acrylic resin, solvent (MEK, EtAc), solid content concentration: 50 mass%) such that the solid content concentration became 37 mass%.

### Preparation of composition 2 for forming hard coat layer

A composition 2 for forming a hard coat layer was prepared by adding propylene glycol monomethyl ether (PGM) to an ultraviolet curable resin composition Z-607-5HL (manufactured by Aica Kogyo Company, Limited, (meth)acrylic resin, solvent (MEK, butyl acetate, propylene glycol monomethyl ether), solid content concentration: 40 mass%) such that the solid content concentration became 25 mass%.

### Formation of hard coat layer A

A hard coat layer A (thickness: 4.3 pm) was formed by applying the composition 1 for forming a hard coat layer to a substrate film (PET film manufactured by TOYOBO CO., LTD., "COSMOSHINE SRF", thickness: 80 pm) using a #10 wire bar, drying the composition at 80°C for 60 seconds, and then irradiating the composition with ultraviolet rays with a light quantity of 80 mJ/cm² using an electrodeless (microwave) lamp.

### Formation of hard coat layer B

A hard coat layer B (thickness: 3.5 pm) was formed by applying the composition 2 for forming a hard coat layer to a PMMA layer of a substrate film (manufactured by Escarbo Sheet Co., Ltd., composite film constituted by two layers of PMMA and PC, "TECHNOLLOY C003", thickness: 200 pm) using a #12 wire bar, drying the composition at 110°C for 60 seconds, and then irradiating the composition with ultraviolet rays with a light quantity of 200 mJ/cm² using a high-pressure mercury lamp of 160 W.

### Preparation of composition for forming first resin layer

Each composition for forming the first resin layer was prepared by blending components at ratios (mass% of the total solid content) shown in Table 1 and adjusting the solid content concentration to 3 mass% using a solvent.

### Manufacture of antireflection film

The first resin layer (thickness: 0.1 pm) was formed by applying the resin composition for forming the first resin layer to a surface of the hard coat layer using a #5 wire bar, drying the composition at 80°C for 60 seconds, and then irradiating the composition with ultraviolet rays with a light quantity of 80 mJ/cm² using an electrodeless (microwave) lamp in a nitrogen atmosphere. Thus, an antireflection film was manufactured.

The following materials were used in the composition for forming the first resin layer.
Binder resin: multifunctional acrylate (dipentaerythritol hexaacrylate)
Photopolymerization initiator: "IRGACURE127" manufactured by BASF Japan Ltd.
Large particles (solid silica particles): average particle size: 100 nm
Hollow silica particles: "THRULYA 4320" manufactured by JGC Catalysts and
Chemicals Ltd., average particle size: 60 nm
Polysiloxane: "Leveling Agent F" manufactured by Aica Kogyo Company, Limited, ether-modified polysiloxane
Fluorine-containing compound: perfluoroalkyl group-containing (meth)acrylate (fluorine-containing compound "KY-1203" manufactured by Shin-Etsu Chemical Co., Ltd.)

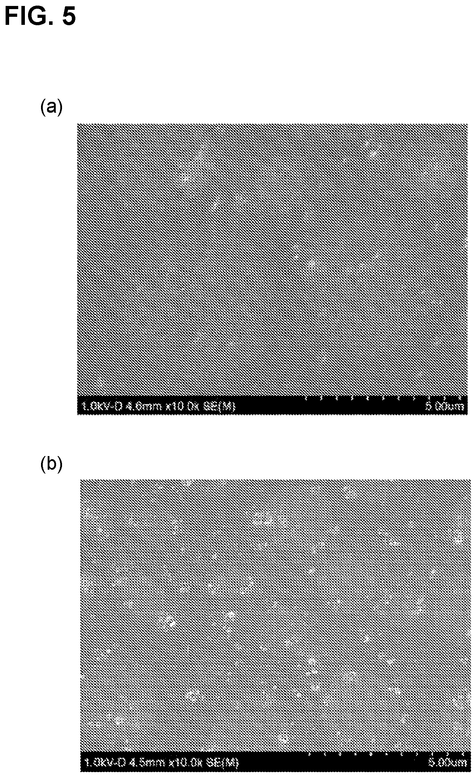

Friction coefficients (µs, µk) and the arithmetic average roughness (Ra) of the surface of the first resin layer of the manufactured antireflection film, and the haze (Hz) and luminous reflectance of the entire antireflection film were measured. The measurement methods were as follows. The measurement results and the composition of the first resin layer are shown in Table 1. Also, SEM photographs of the surface of the first resin layer of Example 1 and Comparative Example 3 are shown in Fig. 5. Fig. 5(a) is the SEM photograph of Example 1, and Fig. 5(b) is the SEM photograph of Comparative Example 3.

### Static friction coefficient and kinetic friction coefficient

The static friction coefficient µs and the kinetic friction coefficient µk of the surface of the first resin layer were determined from a frictional force between the surface of the first resin layer and a haptic contact using a static and kinetic friction measurement device ("Tribomaster TL201Ts" manufactured by Trinity-Lab. Inc.). Measurement conditions were as follows: load: 50 g, speed: 10 mm/s, distance: 30 mm.

### Arithmetic average roughness Ra

The arithmetic average roughness Ra of the surface of the first resin layer was measured using "contactless surface and layer cross-sectional shape measurement system VertScan2.0 (model: R5300GL-L-A100-AC)" manufactured by Mitsubishi Chemical Systems, Inc.

### Haze

The haze of the entire antireflection film was measured in accordance with JIS-K7136 using "Haze Meter NDH7000" manufactured by NIPPON DENSHOKU INDUSTRIES CO., LTD.

### Luminous reflectance

The rear surface (surface opposite to the first resin layer) of the manufactured antireflection film was roughened using #400 sandpaper and painted with a black paint, the 5° regular reflectance of the surface of the first resin layer was measured using an ultraviolet visible near infrared spectrophotometer ("UV-3600" manufactured by SHIMADZU CORPORATION), and the luminous reflectance was calculated by multiplying the measured value by a spectral luminous efficiency value.

### Layer thickness

Thicknesses of the hard coat layer and the first resin layer were measured through spectral interferometry using a film thickness measurement system "Filmetrics F20" manufactured by Filmetrics Japan, Inc.

**Table 1**

| | | | Examples | | | | | | | | | | | | Comparative examples | | |
|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 1 | 2 | 3 |
| Substrate film | Material | | PET | PET | PET | PET | PET | PET | PET | PET | PET | PET | PET | PMMA/ PC | PET | PET | PET |
| | Thickness (µm) | | 80 | 80 | 80 | 80 | 80 | 80 | 80 | 80 | 80 | 80 | 80 | 200 | 80 | 80 | 80 |
| HC layer | Resin type | | A | A | A | A | A | A | A | A | A | A | A | B | A | A | A |
| | Thickness (µm) | | 4.3 | 4.3 | 4.3 | 4.3 | 4.3 | 4.3 | 4.3 | 4.3 | 4.3 | 4.3 | 4.3 | 3.5 | 4.3 | 4.3 | 4.3 |
| First resin layer | Thickness (nm) | | 100 | 100 | 100 | 100 | 100 | 100 | 100 | 100 | 100 | 100 | 100 | 100 | 100 | 100 | 100 |
| | Components | Binder resin | 40.4 | 19.7 | 60.6 | 41.6 | 40.9 | 44.1 | 43.8 | 43.3 | 42.3 | 48.0 | 38.5 | 46.8 | 81.6 | 44.3 | 80.8 |
| | | Photopolymerization initiator | 1.2 | 0.6 | 1.2 | 1.3 | 1.2 | 1.3 | 1.3 | 1.3 | 1.3 | 1.4 | 1.2 | 1.2 | 2.5 | 1.3 | 1.2 |
| | | Solid silica particles (100 nm) | 2.0 | 2.0 | 2.0 | 1.6 | 3.1 | 0.6 | 1.1 | 2.2 | 4.2 | 2.4 | 1.9 | 2.0 | | | 2.0 |
| | | Hollow silica particles (60 nm) | 40.4 | 61.7 | 20.2 | 41.6 | 40.9 | 44.1 | 43.8 | 43.3 | 42.3 | 48.1 | 38.5 | 40.0 | | 44.3 | |
| | | Polysiloxane | 12 | 12 | 12 | 10 | 10 | 10 | 10 | 10 | 10 | | 20 | | 12 | 10 | 12 |
| | | Fluorine-containing compound | 4 | 4 | 4 | 4 | 4 | | | | | | | 10 | 4 | | 4 |
| | Physical properties | µs | 0.6 | 0.7 | 0.6 | 1.0 | 0.7 | 1.4 | 1.3 | 1.0 | 0.5 | 1.4 | 1.0 | 0.7 | 1.6 | 1.4 | 0.5 |
| | | µk | 0.3 | 0.5 | 0.4 | 0.3 | 0.3 | 0.4 | 0.4 | 0.4 | 0.3 | 0.6 | 0.3 | 0.3 | 1.5 | 1.2 | 0.3 |
| | | Ra | 15.9 | 13.7 | 19.6 | 16.3 | 16.1 | 8.6 | 12.8 | 15.6 | 21.0 | 15.7 | 15.4 | 12.0 | 0.9 | 1.7 | 23.0 |
| | | Hz | 1.4 | 0.9 | 2.9 | 1.4 | 1.7 | 1.0 | 1.1 | 1.5 | 2.4 | 1.4 | 1.6 | 1.0 | 0.8 | 0.9 | 4.2 |
| | | Luminous reflectance | 1.3 | 0.9 | 2.4 | 1.2 | 1.0 | 1.3 | 1.2 | 1.2 | 1.1 | 1.2 | 1.5 | 1.6 | | 1.3 | |

It can be found from Examples and Comparative Examples that due to the first resin layer that was formed over the surface of the substrate film containing the large particles (solid silica particles), which formed raised portions in the surface of the first resin layer, and the hollow silica particles having a smaller average particle size than the large particles, a finger sliding operation could be smoothly performed without the sense of the finger being caught being felt at the beginning of the operation, and the antireflection film had excellent transparency. It can also be found that due to the first resin layer containing the hollow silica particles, the refractive index of the first resin layer was low, and the antireflection film had an excellent antireflection function.

In Comparative Example 1, both the large particles (solid silica particles) and the hollow silica particles were not contained in the first resin layer, and therefore, values of µk and µs were both high and the ease of finger sliding was poor although the first resin layer contained the polysiloxane. In Comparative Example 2, the large particles (solid silica particles) were not contained in the first resin layer, and therefore, values of µs and µk were both high and the ease of finger sliding was poor. In Comparative Example 3, the hollow silica particles were not contained in the first resin layer, and therefore, haze was high and transparency was low.

Through comparison between Examples 1, 8, and 10, it can be found that due to the first resin layer further containing the polysiloxane, the value of µs was improved and the ease of finger sliding was improved.

Furthermore, Figs. 5(a) and 5(b) show that, when SEM photographs of Example 1 and Comparative Example 3, in which the same amount of large particles (solid silica particles) were contained in the first resin layer, are compared, the number of large particles (solid silica particles) observed as bright spots is small in the SEM photograph of Example 1 in which the large particles (solid silica particles) were contained together with the hollow silica particles, and this is presumably because agglomeration of the large particles (solid silica particles) was suppressed by the hollow silica particles, which are observed as minute particles in the SEM photograph. On the other hand, large bright spots are observed in the SEM photograph of Comparative Example 3 in which the hollow silica particles were not contained, and agglomerated large particles (solid silica particles) further formed masses. This indicates that the hollow silica particles also contribute to improvement of dispersibility of the large particles (solid silica particles).

Although the embodiments of the present invention have been described, the present invention is not limited to the above embodiments, and various changes can be made within a scope not departing from the gist of the present invention.

### List of Reference Numerals

- 10,20,30,40: Antireflection film
- 12: Substrate film
- 14: First resin layer
- 16: Hard coat layer
- 18: Large particle
- 22: Hollow silica particle
- 24: Transparent adhesive layer
- 26: Separation film
- 28: Adhesive layer
- 32: Protective film

## Claims

1. An antireflection film for a touch panel, to be disposed on a display surface of the touch panel, the antireflection film comprising:
a substrate film; and
a first resin layer that is formed over a surface of the substrate film,
wherein the first resin layer contains large particles that form raised portions in a surface of the first resin layer, hollow silica particles that have a smaller average particle size than the large particles, and a binder resin.

2. The antireflection film according to claim 1,
wherein the amount of the large particles is within a range of 1.0 to 3.5 mass% of the total mass of the first resin layer, and
the amount of the hollow silica particles is within a range of 30 to 70 mass% of the total mass of the first resin layer.

3. The antireflection film according to claim 1 or 2,
wherein the large particles are solid particles.

4. The antireflection film according to any one of claims 1 to 3,
wherein the large particles are inorganic oxide particles.

5. The antireflection film according to any one of claims 1 to 4,
wherein an average particle size of the large particles is greater than or equal to an average thickness of the first resin layer, and an average particle size of the hollow silica particles is smaller than the average thickness of the first resin layer.

6. The antireflection film according to any one of claims 1 to 5,
wherein the first resin layer further contains a polysiloxane.

7. The antireflection film according to claim 6,
wherein the amount of the polysiloxane is within a range of 0.05 to 25 mass% of the total mass of the first resin layer.

8. The antireflection film according to any one of claims 1 to 7, further comprising a hard coat layer between the substrate film and the first resin layer.

9. The antireflection film according to any one of claims 1 to 8, further comprising a protective film that is provided over a surface of the first resin layer with an adhesive layer interposed therebetween.

10. The antireflection film according to any one of claims 1 to 9, further comprising a transparent adhesive layer that is provided on a surface of the substrate film opposite to the first resin layer.

11. A method for manufacturing an antireflection film for a touch panel, to be disposed on a display surface of the touch panel, the method comprising:
forming a first resin layer over a surface of a substrate film,
wherein the first resin layer contains large particles that form raised portions in a surface of the first resin layer, hollow silica particles that have a smaller average particle size than the large particles, and a binder resin.
